**Europäisches Patentamt**

**European Patent Office**

**Office européen des brevets**

(11) Veröffentlichungsnummer: **0 253 273 B1**

# EUROPÄISCHE PATENTSCHRIFT

(45) Veröffentlichungstag der Patentschrift:
07.03.90

(51) Int. Cl.⁴: **B01D 46/24,** C10K 1/02

(21) Anmeldenummer: 87109755.6

(22) Anmeldetag: 07.07.87

(54) Vorrichtung zur Gasentstaubung.

(30) Priorität: 10.07.86 DE 3623147

(43) Veröffentlichungstag der Anmeldung:
20.01.88 Patentblatt 88/3

(45) Bekanntmachung des Hinweises auf die Patenterteilung:
07.03.90 Patentblatt 90/10

(84) Benannte Vertragsstaaten:
AT BE DE ES GB

(56) Entgegenhaltungen:
FR-A- 888 429
FR-A- 2 556 608
LU-A- 54 396

(73) Patentinhaber: METALLGESELLSCHAFT AG,
Reuterweg 14 Postfach 3724, D-6000 Frankfurt/M.1(DE)

(72) Erfinder: Reichel, Dieter, Rüsterweg 15,
D-8750 Aschaffenburg(DE)
Erfinder: Jakobs, Rudolf, Lorscher Strasse 8,
D-6380 Bad Homburg 1(DE)
Erfinder: Brehm, Lothar, Sachsenhäuser
Landwehrweg 69, D-6000 Frankfurt 70(DE)
Erfinder: Quass, Gunter, Adolf-Leweke-Strasse 15,
D-6000 Frankfurt am Main 50(DE)

(74) Vertreter: Rieger, Harald, Dr., Reuterweg 14,
D-6000 Frankfurt a.M.(DE)

**Beschreibung**

Die Erfindung bezieht sich auf eine Vorrichtung zur Entstaubung von Gasen mit Temperaturen bis 900°C und Drücken bis 20 bar mittels gasdurchlässiger Filterelemente.

Zur Verbesserung des thermischen Wirkungsgrades von Kraftwerken werden kombinierte Anlagen konzipiert, in denen die Energie heißer Brenngase primär über Gasturbinen und sekundär über Dampfturbinen ausgenutzt wird. In derartigen Anlagen wird die Umsetzung der Brennstoffe mit Luft bei erhöhtem Druck durchgeführt, um für die Gasturbine ein entsprechendes Druckgefälle zur Verfügung zu haben.

Wie bei allen Prozessen, bei denen chemisch gebundene Energie durch Verbrennung in mechanische bzw. elektrische Energie umgesetzt wird, hängt der Wirkungsgrad letztlich davon ab, bis zu welchen Höchsttemperaturen die verfügbaren Werkstoffe eingesetzt werden können. Auf der anderen Seite weiß man, daß der $NO_x$-Gehalt der Abgase und damit die Umweltbelastung umso höher ist, je höher die Verbrennungstemperatur ist. Man hat daher schon vorgeschlagen, insbesondere Kohle in einer stationären oder zirkulierenden Wirbelschicht zu verbrennen, wobei die Differenz zwischen höchster auftretender Temperatur und oberster Prozeß-Nutztemperatur wesentlich geringer gehalten werden kann als bei normalen Feuerungen. De heißen Abgase aus Wirbelschicht-Verbrennungsanlagen enthalten jedoch zwangsläufig nicht unerhebliche Mengen an Staub, der in Gasturbinen erosiv wirkt und deshalb zuvor aus dem Gas entfernt werden muß. Für derartige und andere Zwecke werden Vorrichtungen zur Entstaubung von Gasen mit Temperaturen bis 900°C und Drücken bis 20 bar benötigt. Im vorliegenden Fall soll die Entstaubung mittels gasdurchlässiger Filterelemente bewirkt werden. Derartige Filterelemente werden meist in Form von unten geschlossenen Zylindern ausgebildet und zu mehreren in einem gemeinsamen Boden aufgehängt. Gebräuchlich ist hierfür die Bezeichnung "Schlauchfilter", die bei Hochtemperaturfilter jedoch vermieden wird, weil es sich dabei nicht mehr um flexible Gebilde handelt, sondern um starre Filterelemente.

Bei derartigen Filterelementen wird der Gasdurchgang intermittierend abgeschaltet und sie werden zur Abreinigung von einem Reingasstrom in entgegengesetzter Richtung durchströmt. Bei der Anwendung dieser Filterelemente unter den eingangs genannten Bedingungen ist es nicht möglich, sie wie üblich in einen ebenen Rohrboden einzusetzen. Dieser muß nämlich nicht nur für einen Differenzdruck von bis zu 0,2 bar in beiden Richtungen (Betrieb/Abreinigung) und zur Abtragung des Gewichts der Filterelemente bei 900°C ausgelegt werden, er muß auch mit dem äußeren Gehäuse verbunden werden, für dessen druckhaltende Wandung im Hinblick auf die Vermeidung von Wärmeverlusten und den Einsatz wirtschaftlich vertretbarer Werkstoffe eine Temperatur von nicht mehr als 200°C zugelassen werden kann. Berechnungen haben gezeigt, daß die damit gegebene Temperaturdifferenz von 700°C zu hoch ist, um einen Rohrboden gasdicht mit der druckhaltenden Wardung des äußeren Gehäuses zu verbinden. Selbst mit einem wassergekühlten Rohrboden, der schon im Hinblick auf die zwangsläufig damit verbundenen Wärmeverluste nachteilig ist, konnte das konstruktive Problem nicht gelöst werden.

Es besteht somit die Aufgabe, für die Entstaubung von Gasen mit Temperaturen bis 900°C und Drücken bis 20 bar mittels gasdurchlässiger Filterelemente eine Vorrichtung vorzuschlagen, bei der die Filterelemente betriebssicher im Gasstrom angeordnet werden können, ohne daß die vorgenannten, mit einem üblichen Rohrboden verbundenen Nachteile auftreten.

Zur Lösung dieser Aufgabe wird eine Vorrichtung der eingangs genannten Art mit folgenden Merkmalen vorgeschlagen:

a) ein druckfestes, zylindrisches Gehäuse (l) mit unten angeschlossenem konischen Staubsammelbunker (2), gewölbtem Deckel (3) mit zylindrischem Aufsatz (4), das innen mit einer wärmeisolierenden Ausmauerung (5) und außen mit einer Isolierung (6) versehen ist und unten einen Gaseinlaß (7) und im zylindrischen Aufsatz (4) einen oberen, horizontalen Gasauslaß (8) aufweist;

b) ein gasdichtes, birnenförmiges inneres Gehäuse (9), das im Gehäuse (l) über eine wärmedämmende Tragkonstruktion (l8 bis 22) gelagert ist, einen Gasauslaßstutzen (ll) aufweist und in dessen gewölbtem Boden (l2) zylindrische Filterelemente (l3) befestigt sind;

c) einen gasdichten Kompensator (l4) zwischen Gasauslaßstutzen (ll) des inneren Gehäuses (9) und Gasauslaß (8) des Gehäuses (l).

Vorteilhafte Weiterbildungen der Erfindung ergeben sich aus den Unteransprüchen 2 bis 7.

Der Kern des Erfindungsgedankens besteht darin, den sonst üblichen Rohrboden zur Aufnahme der Filterelemente durch ein gasdichtes, birnenförmiges inneres Gehäuse zu ersetzen, das über eine wärmedämmende Tragkonstruktion im äußeren Gehäuse gelagert ist. Auf diese Weise ist es möglich, die "tragende" und "abdichtende" Funktion so zu trennen, daß die mit dem großen Temperaturunterschied zwischen äußerem Gehäuse und inneren Bauteilen verbundenen Schwierigkeiten gelöst werden konnten.

Weitere Einzelheiten und Vorteile des Erfindungsgedankens werden anhand des in Figur l und 2 dargestellten Ausführungsbeispiels näher erläutert:

Figur l zeigt einen vertikalen Längsschnitt durch eine Vorrichtung gemäß der Erfindung.

Figur 2 zeigt einen horizontalen Schnitt gemäß der Linie A-A nach Figur l.

Figur 3 zeigt die Einzelheit B in vergrößertem Maßstab.

Die Vorrichtung gemäß Figur l besteht im wesentlichen aus einem zylindrischen Gehäuse (l) mit unten

angeschlossenem Staubsammelbunker (2), gewölbtem Deckel (3) und zylindrischen Aufsatz (4), das innen mit einer wärmeisolierenden Ausmauerung (5) und außen mit einer Isolierung (6) versehen ist und unten einen Gaseinlaß (7) und im zylindrischen Aufsatz (4) einen oberen, horizontalen Gasauslaß (8) aufweist. Sie umfaßt ferner ein gasdichtes, birnenförmiges inneres Gehäuse (9), das im Gehäuse (I) über eine wärmedämmende Tragkonstruktion (I8 bis 22) gelagert ist, einen Gasauslaßstutzen (II) aufweist und in dessen gewölbtem Boden (I2) zylindrische Filterelemente (I3) befestigt sind. Außerdem ist ein gasdichter Kompensator (I4) zwischen Gasauslaßstutzen (II) des inneren Gehäuses (9) und Gasauslaß (8) des Gehäuses (I) vorgesehen. Das innere Gehäuse (9) ist über Pratzen (I8) in drei gleichmäßig im Umfang verteilten U-förmigen Auflagern (I9) eines zylindrischen Tragelements (20) zentriert und gelagert, das seinerseits über Pratzen (2I) in U-förmigen Auflagern (22) des Gehäuses (I) zentriert und gelagert ist. Zwischen den Pratzen (I8, 2I) und den Auflagern (I9, 22) sind wärmedämmende Materialien (23) angeordnet. Auf diese Weise ist es möglich, das innere Gehäuse (9) trotz des großen Temperaturunterschiedes von bis zu 700°C im äußeren Gehäuse (I) abzutrgen und zu zentrieren, ohne seine Wärmedehnung in vertikaler und horizontaler Richtung zu beeinträchtigen. Das gilt auch für den mit dem inneren Gehäuse (9) fest verbundenen Gasauslaßstutzen (II), der über den Kompensator (I4) gasdicht mit dem Gasauslaß (8) des äußeren Gehäuses (I) verbunden ist, wobei dieser Kompensator (I4) nur im Hinblick auf Gasdichtigkeit und die Reduzierung des Wärmeübergangs auf ein unkritisches Maß ausgelegt werden muß, nicht aber noch auf die Abtragung der Filterelemente. Da andererseits das innere Gehäuse (9) bis zur Kompensator (I4) - abgesehen vom Druckverlust der Filterelemente (I3) - innen und außen mit dem gleichen Druck beaufschlagt ist, kann es allein auf die Abtragung der Filterelemente und auf Gasdichtigkeit hin konzipiert werien, ohne daß noch wesentliche Beanspruchung infolge von Druckdifferenzen berücksichtigt werden müssen. Die Druckdifferenz zwischen Gas und Umgebung liegt am Kompensator (I4) an, während die Abtragung des inneren Gehäuses (9) und der Filterelemente (I3) über die wärmedämmende Tragkonstruktion (I8 bis 22) realisiert ist. Damit sind die Funktionen "Druckhaltung" und "Abtragung" konstruktiv getrennt, womit die geschilderten konstruktiven Schwierigkeiten gelöst wurden.

Das innere Gehäuse (9) ist durch einen aufgeschweißten, im Querschnitt groß U-förmigen Deckel (I6) abgeschlossen, während der zylindrische Aufsatz des Gehäuses (I) durch einen aufgeschraubten Deckel abgeschlossen ist. Das Gehäuse (9) besitzt einen verlägerten Hals (I7), so daß es mehrfach durch Abschleifen der Schweißnaht (I7a) und Wiedereinschweißen eines Deckels (I6) geöffnet und geschlossen werden kann. Die Deckel (I5 und I6) verschließen eine von oben zugängliche Montageöffnung, die erforderlich ist, um die Filterelemente (I3) einbringen und ggfs. austauschen zu können. Im übrigen ist das gesamte Innenvolumen des zylindrischen Aufsatzes (4) und des oberen horizontalen Gasauslasses mit Isoliermaterial aufgefüllt. Das Geäuse (I) besitzt außerdem noch eine Montageöffnung (28) und einen unteren Staubauslaß (27).

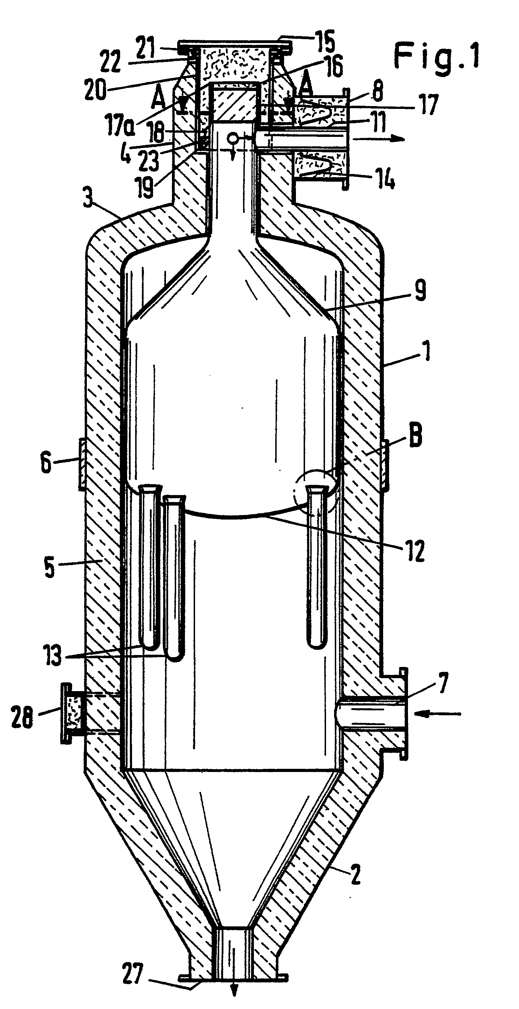

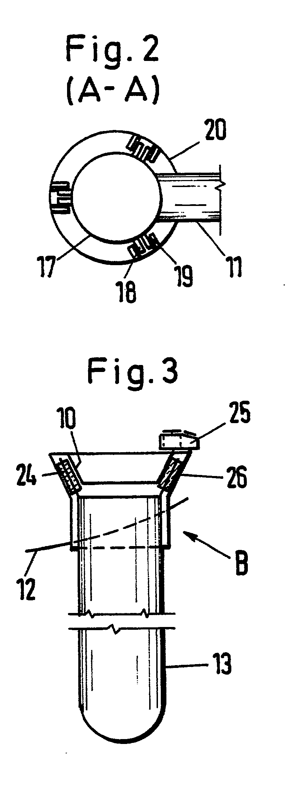

In Figur 2 ist ein Horizontalschnitt gemäß Linie A-A nach Figur I dargestellt, wobei das zylindrische Tragelement (20) und der verlängerte Hals (I7) des inneren Gehäuses (9) als konzentrische Kreise zu erkennen sind. Vom verlängerten Hls (I7) geht der horizontale Gasauslaßstutzen (II) ab. Am verlängerten Hals (I7) sind drei gleichmäßig am Umfang verteilte Pratzen (I8) angeschweißt, die in entsprechend verteilte U-förmige Auflager (I9) des zylindrischen Tragelements eingreifen. Auf diese Weise ist das Gehäuse (9) gelagert und zentriert, ohne daß seine horizontale Wärmedehnung behindert ist.

In Figur 3 ist die Einzelheit B gemäß Figur I in vergrößertem Maßstab dargestellt. Die unten geschlossenen, zylindrischen Filterelemente (I3) besitzen am oberen Ende einen konischen Ansatz, der in an sich bekannter Weise unter Zwischenlage von Dichtungsmitteln (24) mittels Ringen (I0) und Keilen (25) in konischen Aufnahmebuchsen (26) im Boden (I2) des Gehäuses (9) befestigt sind. Auf diese Weise wird eine sichere Befestigung der Filterelemente (I3) im Boden (I2) hergestellt, die Gasdichtigkeit auch unter wechselnden Betriebsbedingungen gewährleistet.

## Patentansprüche

I. Vorrichtung zur Entstaubung von Gasen mit Temperaturen bis 900°C und Drücken bis 20 bar mittels gasdurchlässiger Filterelemente, enthaltend:

a) ein druckfestes, zylindrisches Gehäuse (I) mit unten angeschlossenem konischen Staubsammelbunker (2), gewölbtem Deckel (3) mit zylindrischem Aufsatz (4), das innen mit einer wärmeisolierenden Ausmauerung (5) und außen mit einer Isolierung (6) versehen ist und unten einen Gaseinlaß (7) und im zylindrischen Aufsatz (4) einen oberen, horizontalen Gasauslaß (8) aufweist,

b) ein gasdichtes, birnenförmiges inneres Gehäuse (9), das im Gehäuse (I) über eine wärmedämmende Tragkonstruktion (I8 bis 22) gelagert ist, einen Gasauslaßstutzen (II) aufweist und in dessen gewölbtem Boden (I2) zylindrische Filterelemente (I3) befestigt sind, sowie

c) einen gasdichten Kompensator (I4) zwischen Gasauslaßstutzen (II) des inneren Gehäuses (9) und Gasauslaß (8) des Gehäuses (I).

2. Vorrichtung nach Anspruch I, dadurch gekennzeichnet, daß der zylindrische Aufsatz (4) des Gehäuses (I) durch einen aufgeschraubten Deckel (I5) und das innere Gehäuse (9) durch einen aufgeschweißten, im Querschnitt U-förmigen Deckel (I6) abgeschlossen sind.

3. Vorrichtung nach Anspruch 2, dadurch gekennzeichnet, daß das Gehäuse (9) einen verlängerten Hals (I7) aufweist, so daß das Gehäuse (9) mehrfach durch Abschleifen der Schweißnaht (I7a) und Wiedereinschweißen eines Deckels (I6) geöffnet und geschlossen werden kann.

4. Vorrichtung nach einem der Ansprüche I bis 3, dadurch gekennzeichnet, daß das Gehäuse (9) über Pratzen (I8) in drei gleichmäßig im Umfang verteilten

U-förmigen Auflagern (l9) eines zylindrischen Tragelements (20) zentriert und gelagert ist, das seinerseits über Pratzen (2l) in U-förmigen Auflagern (22) des Gehäuses (l) zentriert und gelagert ist.

5. Vorrichtung nach Anspruch 4, dadurch gekennzeichnet, daß zwischen den Pratzen (l8,2l) und den Auflagern (l9,22) wärmedämmende Materialien (23) angeordnet sind.

6. Vorrichtung nach einem der Ansprüche l bis 5, dadurch gekennzeichnet, daß die zylindrischen Filterelemente (l3) unter Zwischenlage von Dichtungsmitteln (24) mittels Ringen (l0) und Keilen (25) in konischen Aufnahmebuchsen (26) im Boden (l2) des Gehäuses (9) befestigt sind.

7. Vorrichtung nach einem der Ansprüche l bis 6, dadurch gekennzeichnet, daß der Kompensator (l4) durch Schweißen mit dem Gasauslaßstutzen (ll) und dem Gasauslaß (8) gasdicht befestigt und derart ausgebildet ist, daß der Wärmeübergang vom Gasauslaßstutzen (ll) zum Gasauslaß (8) auf ein unkritisches Maß reduziert ist.

## Claims

1. Apparatus for removing dust from gases at temperatures of up to 900°C and under pressures of up to 20 bar by means of gas-permeable filter elements, containing:
   a) a pressure-tight, cylindrical housing (1) to which a conical dust-collecting bin (2) is connected at the bottom, a curved cover (3) having a cylindrical top extension (4), which housing is provided on the inside with a heatinsulating brick lining (5) and on the outside with an insulation (6), and has a gas inlet (7) at the bottom and an upper, horizontal gas outlet (8) in the cylindrical top extension (4);
   b) a gas-tight, pear-shaped inner housing (9) which is mounted in the housing (1) by means of a heatinsulating carrying structure (18 to 22), has a gas outlet port (11), and in the curved base (12) of which cylindrical filter elements (13) are fixed;
   c) a gas-tight compensator (14) between the gas outlet port (11) of the inner housing (9) and the gas outlet (8) of the housing (1).

2. Apparatus according to Claim 1, characterised in that the cylindrical top extension (4) of the housing (1) is closed by a screwed-on cover (15) and the inner housing (9) is closed by a welded-on cover (16) which is U-shaped in cross-section.

3. Apparatus according to Claim 2, characterised in that the housing (9) has an elongated neck (17) so that the housing (9) can be opened and closed repeatedly by grinding off the weld seam (17a) and welding a cover (16) back on.

4. Apparatus according to one of Claims 1 to 3, characterised in that the housing (9) is centred and mounted on lug supports (18) in three U-shaped supports (19) of a cylindrical supporting element (20) which are regularly spaced apart on the circumference, which element itself is centred and mounted by lug supports (21) in U-shaped supports (22) of the housing (1).

5. Apparatus according to Claim 4, characterised in that heat-insulating materials (23) are disposed between the lug supports (18, 21) and the supports (19, 22).

6. Apparatus according to one of Claims 1 to 5 characterised in that the cylindrical filter elements (13) are attached in conical receiving bushings (26) in the base (12) of the housing (9) by means of rings (10) and wedges (25) with the interposition of sealing means (24).

7. Apparatus according to one of Claims 1 to 6, characterised in that the compensator (14) is attached in gas-tight manner to the gas outlet port (11) and the gas outlet (8) by welding and is constructed so that the heat transfer from the gas outlet port (11) to the gas outlet (8) is reduced to a non-critical value.

## Revendications

1. Dispositif pour le dépoussiérage de gaz à des températures de 900°C et sous des pressions de 20 bars au moyen d'éléments filtrants perméables aux gaz, ce dispositif contenant:
   a) un logement cylindrique (1) résistant à la pression et au bas duquel est raccordée une trémie conique collectrice de poussières (2), un couvercle bombé (3) pourvu d'une garniture cylindrique (4) pourvu intérieurement d'une maçonnerie d'isolation thermique (5) et extérieurement d'une isolation (6) et, dans le bas, une admission de gaz (7) et, dans le chapeau cylindrique (4), une évacuation de gaz supérieure horizontale (8);
   b) un logement intérieur (9) étanche aux gaz et en forme de poire qui est monté dans le logement (1) sur une construction support (18 à 22) d'isolation thermique, comportant une tubulure d'évacuation de gaz (11) et dans le fond bombé (12) duquel sont fixés des éléments filtrants cylindriques (13);
   c) un compensateur (14) étanche aux gaz entre la tubulure d'évacuation de gaz (11) du logement intérieur (9) et l'évacuation de gaz (8) du logement (1).

2. Dispositif selon la revendication 1, caractérisé en ce que la garniture cylindrique (4) du logement (1) est fermée par un couvercle vissé (15), tandis que le logement intérieur (9) est fermé par un couvercle à section transversale en U (16) soudé.

3. Dispositif selon la revendication 2, caractérisé en ce que le logement (9) comporte un col allongé (17), tant et si bien que le logement (9) peut être ouvert et fermé à plusieurs reprises en meulant le cordon de soudure (17a) et en resoudant un couvercle (16).

4. Dispositif selon une des revendications 1 à 3, caractérisé en ce que le logement (9) est centré et supporté par des griffes (18) dans trois supports (19) en U répartis uniformément sur la périphérie et faisant partie d'un élément support cylindrique (20) qui, à son tour, est centré et maintenu par des griffes (21) dans des supports en U (22) du logement (1).

5. Dispositif selon la revendication 4, caractérisé en ce que, entre les griffes (18, 21) et les supports (19, 22), sont disposés des matériaux d'isolation thermique (23).

6. Dispositif selon une des revendications 1 à 5, caractérisé en ce que les éléments filtrants cylindriques 13 sont fixés en intercalant des moyens d'étanchement (24) au moyen d'anneaux (10) et de coins (25) dans des douilles réceptrices coniques (26) dans le fond (12) du logement (9).

7. Dispositif selon une des revendications 1 à 6, caractérisé en ce que le compensateur (14) est fixé de manière étanche aux gaz par soudage avec la tubulure d'évacuation de gaz (11) et la sortie de gaz (8), tandis qu'il est réalisé de telle sorte que le transfert de chaleur de la tubulure d'évacuation de gaz (11) et la sortie de gaz (8) soit réduit dans une mesure non critique.

Fig.1

# Fig. 2
# (A-A)

# Fig. 3